# NEUE EUROPÄISCHE PATENTSCHRIFT

(11) **EP 1 297 923 B2**
(45) Veröffentlichungstag und Bekanntmachung des Hinweises auf die Entscheidung über den Einspruch: **22.10.2008**
(45) Hinweis auf die Patenterteilung: 27.04.2005
(21) Anmeldenummer: 02020205.7
(22) Anmeldetag: 10.09.2002
(51) Int. Cl.: B23C 3/12

(54) **Vorrichtung zum Entfernen der überstehenden Schweissraupen an den Eckverbindungen von aus Kunststoffprofilen zusammengeschweissten Fenster- oder Türrahmen**
Machining unit for deburring of corner joints of window or door frames of welded plastic profiles
Unité d'usinage pour enlever des bavures de soudage des joints d'angle de cadres de fenêtre ou porte en profilés en matière plastique soudés

(30) Priorität: 28.09.2001 DE 10148104
(43) Veröffentlichungstag der Anmeldung: 02.04.2003
(73) Patentinhaber: ROTOX GmbH B. EISENBACH, 56858 Grenderich (DE)
(72) Erfinder: Eisenbach, Bernd, Dipl.-Ing., 65611 Brechen (DE); Schön, Christoph, 65606 Villmar-Aumenau (DE); Hammes, Heinz Josef, 56820 Senheim (DE)
(74) Vertreter: Müller, Eckhard

(56) Entgegenhaltungen:
- EP-A- 0 705 659
- - -
- DE-A- 3 539 670
- GB-A- 2 283 193

## Beschreibung

Die Erfindung betrifft eine Vorrichtung zum Entfernen von überstehenden Schweißraupen an Eckverbindungen von aus gewölbten Kunststoffprofilen zusammengeschweißten Fenster- oder Türrahmen mit einem nichtrotierendem Schneidwerkzeug, insbesondere einem Abstech- oder Abziehmesser.

Eine Vorrichtung zum Entfernen von überstehenden Schweißraupen an Eckverbindungen von aus Kunststoffprofilen zusammengeschweißten Fenster- oder Türrahmen, mit einem Abstechmesser, welches in eine Werkzeugaufnahme eingesetzt ist, wobei die Werkzeugaufnahme mittels eines verfahrbaren Halters oder Werkzeugschlittens in einer ersten Achse sowie einer zweiten Achse verfahrbar ist, wobei die beiden Achsen eine zur Rahmenebene im wesentlichen senkrechte. Ebene aufspannen wobei die Werkzeugaufnahme um eine Schwenkachse verschwenkbar am Werkzeugschlitten gelagert ist, dass die Werkzeugaufnahme beziehungsweise das Schneidwerkzeug mit einer Federvorspannung beaufschlagt ist und das Schneidwerkzeug eine Tast- beziehungsweise Führungsfläche zum Erfassen der Profilierung der Oberfläche des Profils aufweist, ist aus der DE 3317632 A bekannt.

Dabei kann sich die Werkzeugaufnahme über Abstützrollen auf den Sichtflächen des Profils abstützen.

Eine derartige Vorrichtung zum Entfernen von überstehenden Schweißraupen an Eckverbindungen von aus Kunststoffprofilen zusammengeschweißten Fenster- oder Türrahmen ist aus der EP-A-0 705 659 bekannt.

Des weiteren ist aus der DE 35 39 670 A eine Vorrichtung zum Abstechen des Schweißgrates an Fenster- oder Türrahmen bekannt mit einem in einem Messerhalter aufgenommenen Abstechmesser. Der Messerhalter ist in einem Schwenklager an einem Träger schwenkbar gelagert und stützt sich an diesem über eine Druckfeder ab. Der Träger ist Teil eines Schlittens und mittels eines Druckmittelzylinders und einer senkrechten Führung am Schlitten höhenbeweglich geführt. Der Schlitten seinerseits führt eine Vorschubbewegung in Längsrichtung des Schweißgrades an der Eckverbindung des Fenster- oder Türrahmens aus. Seitlich neben dem Abstechmesser und gegenüber dessen Messerspitze zurückgesetzt sind zwei Taster angeordnet, die jeweils über einen Tastarm starr mit einem Anschlagkörper verbunden sind. Bei einer Vorschubbewegung des Schlittens gelangen zunächst die Taster in Berührung mit der zu bearbeitenden Profilfläche. Die abgerundeten Taster gleiten dabei über die Außenkante der Profilfläche und drücken das Abstechmesser soweit nach unten, dass die Messerschneide genau in der Ebene der Profilfläche anschneidet. Bei der weiteren Vorschubbewegung kommen die Anschlagflächen des Anschlagkörpers zur Anlage an den Profilinnenflächen. Dabei wird die Bewegung des Anschlagkörpers und dabei zugleich auch der Taster angehalten, während der Vorschub des Abstechmessers weiterläuft. Das Abstechmesser führt sich dabei an der Profilfläche selbst.

Weiterhin ist aus der DE 23 17 554 A eine Vorrichtung zum Entfernen von überstehenden Graten bekannt, bei der die Bearbeitungswerkzeuge als Fräswerkzeuge oder Abziehmesser ausgebildet und an einem Support angeordnet sind. Der Support ist mittels eines Kreuzschlittens längs einer Bahn bewegbar, die in einer Ebene parallel zur Ebene des geschweißten Rahmens liegt. Die Bearbeitungswerkzeuge werden an den zu bearbeitenden Flächen entlanggeführt, wobei die geschlossene Bahn des Supports mindestens einen geraden Abschnitt aufweist, der parallel zur Schweißnaht des Rahmenecks verläuft. Eine Bearbeitung von gewölbten Oberflächen der verschweißten, den Rahmen bildenden Profile ist mit dieser bekannten Vorrichtung nicht möglich.

Aus der DE 28 28 258 A ist eine weitere Vorrichtung zum Entfernen von überstehenden Schweißraupen an den Ecken von aus Kunststoffprofilstücken geschweißten Rahmen bekannt, wobei ein Abstechmesser zum Entfernen der Schweißraupe an einer Sichtfläche des Rahmens vorgesehen ist. Das Abstechmesser ist an einem einzigen Support angebracht, wobei der Support nur in einer Längsrichtung verschiebbar an einem Grundgestellt geführt ist. Das Abstechmesser ist an einem schwenkbar gelagerten Arm angebracht, der bezüglich eines Supportschenkels verschwenkbar ist. Mittels einer Druckfeder wird der Arm federnd gegen den Rahmen gedrückt. Anstelle der Feder können auch Druckmittelzylinder vorgesehen sein. Diese Vorrichtung ist ersichtlich nur dazu geeignet, Schweißraupen von Profilen mit ebener Oberfläche zu entfernen.

Eine weitere Vorrichtung ist beispielsweise aus der DE 30 20 739 A bekannt. Dabei wird ein Schneidwerkzeug in eine Werkzeugaufnahme eingesetzt, welche mittels eines in zwei Achsen verfahrbaren Werkzeugschlittens längs der Schweißraupe auf der Eckverbindung der beiden Kunststoffprofile verfahrbar ist, wodurch die Schweißraupe abgetragen wird. Dabei kann das Messer in seinem Anstellwinkel gegenüber der Bearbeitungsfläche einstellbar sein, um Profiltoleranzen auszugleichen. Nachteilig bei dieser bekannten Vorrichtung ist, dass der Anstellwinkel zwar variiert werden kann, jedoch beim Abfahren der jeweiligen Eckverbindung gegenüber der Kontur der Profiloberfläche konstant bleibt. Die Beweglichkeit des Messers in einem Messerhalter dient dabei lediglich einem Profilhöhenausgleich.

Aus der DE 27 22 283 A ist ein Schneidwerkzeug zum Einschneiden einer Schattennut bekannt mit einer Schneide und beiderseits der Schneide angeordneten stumpfen, auf der Außenfläche der Kunststoffprofile sich abstützenden Kanten als Führungsflächen für das Werkzeug, wobei die Schneide um die Nuttiefe höher liegt als die abstützenden Kanten.

Mittlerweile kommen verstärkt Profile auf den Markt, bei welchen die Oberfläche der Profile entweder einseitig, beispielsweise zur Innenecke hin, oder beidseitig auch zur Außen und Innenecke hin gewölbt oder im Querschnitt bogenförmig ausgeführt ist. Derartige Profile lassen sich mit den bekannten Vorrichtungen und Schneidwerkzeugen praktisch nicht bearbeiten, da die Schneide während des Verfahrens längs der gewölbten Oberflächenstruktur, insbesondere an der Innenund Außenecke, aus dem Profil herauslaufen bzw. nicht in Eingriff gelangen würde.

Davon ausgehend liegt der Erfindung die Aufgabe zugrunde, eine Vorrichtung der eingangs genannten Art dahingehend weiterzubilden, dass auch eine Bearbeitung von auf der Profiloberfläche gewölbten Profilen ermöglicht ist.

Diese Aufgabe wird gelöst durch eine Vorrichtung mit den Merkmalen des Anspruches 1. Vorteilhafte Ausgestaltungen der Vorrichtung finden sich in den Unteransprüchen.

Durch die erfindungsgemäße Vorrichtung ist es möglich, auch gewölbte Profiloberflächen zu bearbeiten und somit die Schweißraupen zu entfernen. Das Schneidwerkzeug wird zum einen in horizontaler Richtung geführt. Weiterhin wird das Schneidwerkzeug jedoch auch in vertikaler Richtung verfahren, entsprechend der jeweiligen Wölbung der zu bearbeitenden Oberfläche. Dadurch, dass das Schneidwerkzeug um eine Achse verschwenkbar gelagert und von einer Federvorspannung beaufschlagt ist, kann der Anstellwinkel des Schneidwerkzeuges beziehungsweise der Schneide zur Oberfläche des zu bearbeitenden Profils während des Bearbeitungsvorganges variiert werden. Hierdurch ist es nunmehr möglich, auch unebene Profiloberflächen mittels des Schneidwerkzeuges von der Schweißraupe zu befreien.

Da das Schneidwerkzeug eine Tast- beziehungsweise Führungsfläche zum Erfassen der individuellen Profilierung der Oberfläche des Profils aufweist, ist ein Anstellwinkel des Schneidwerkzeuges beziehungsweise dessen Schneide bezüglich der Oberfläche während des Schneidvorganges einer Schweißraupe variabel einstellbar beziehungsweise veränderbar. Aufgrund der Schwenklagerung des Schneidwerkzeuges in Verbindung mit der Beaufschlagung des Schneidwerkzeuges mit einer Federvorspannung kann sich das Schneidwerkzeug hinsichtlich des Anstellwinkels der individuellen Konturierung beziehungsweise Profilierung der zu bearbeitenden Rahmenoberfläche anpassen, da an dem Schneidwerkzeug Führungsflächen vorgesehen sind, welche die individuelle Profilierung des zu bearbeitenden Profils erfassen und beim Überfahren der zu bearbeitenden Profilbereiche für eine selbsttätige Variation der individuellen Schwenklage des Schneidwerkzeuges. Damit passt sich der Anstellwinkel des Schneidwerkzeuges dem jeweiligen Profilbereich des zu bearbeitenden Rahmens individuell an. Es handelt sich hierbei um eine sozusagen passive Steuerung des Anstellwinkels, indem das Schneidwerkzeug mit einer Tast- beziehungsweise Führungsfläche an der Profiloberfläche anliegt und diese sozusagen abnimmt beziehungsweise abtastet und für die Einstellung eines korrespondierenden Anstellwinkels der Schneide des Schneidwerkzeuges sorgt.

Es ist vorgesehen, dass der Werkzeugschlitten beziehungsweise Halter eine Steuervorrichtung aufweist, in der das Profil der Oberfläche des zu bearbeitenden Rahmens abgelegt ist, wobei das Schneidewerkzeug entsprechend der jeweiligen Wölbung der zu bearbeitenden Oberfläche in vertikaler Richtung verfahrbar ist. Insoweit wird dann letztendlich das Schneidwerkzeug entsprechend den in der Steuervorrichtung abgelegten Profilmaßen entlang der Schweißraupe verfahren, wobei das Schneidwerkzeug sich aufgrund der weiteren mechanischen Abtastung der Profiloberfläche und der Schwenklagerung hinsichtlich des Anstellwinkels der Schneide zur Profiloberfläche selbsttätig und individuell einstellt. Nach einer anderen vorteilhaften Ausgestaltung der Erfindung ist es vorgesehen, dass die Federvorspannung die Werkzeugaufnahme beziehungsweise das Schneidwerkzeug hin zur Oberfläche des Profils zu verschwenken trachtet. Insbesondere in Kombination mit der mechanischen Abtastung der Oberflächenprofilierung aufgrund der Führungsflächen wird aufgrund dieser Maßnahme eine selbsttätige Einstellung des gewünschten Anstellwinkels über den Verfahrweg des Schneidwerkzeuges entlang der Schweißraupe bewerkstelligt.

Nach einer anderen vorteilhaften Ausgestaltung der Erfindung ist der Schwenkarm als Abstand zwischen Schwenkachse und Schneide des Schneidwerkzeuges im Vergleich zur Profilbreite im Bereich der zu bearbeitenden Eckverbindung kurz und nimmt bevorzugt Werte an, die keiner als 1/3, insbesondere kleiner als 1/5 der Profilbreite sind. Aufgrund dieser Maßnahme des Einsatzes eines recht kurzen Schwenkarms, insbesondere im Vergleich zur Vorrichtung nach der DE 28 28 258 A1, wird die Einnahme des individuell veränderlichen Anstellwinkels über den Bearbeitungsweg entlang des Eckprofils wesentlich begünstigt.

Weiterhin bietet es sich an, dass der variabel einstellbare Anstellwinkel des Schneidwerkzeuges eine Funktion des Verfahrweges des Werkzeugschlittens beziehungsweise Schneidwerkzeuges in der ersten und/oder zweiten Achse ist.

Die Federvorspannung wird nach einer vorteilhaften Ausführungsform durch ein Federelement, bevorzugt eine Druckfeder, erzeugt.

Insoweit ist es vorgesehen, dass das Federelement bevorzugt zwischen dem Halter und der Werkzeugaufnahme eingespannt ist.

Das Schneidwerkzeug selbst besitzt bevorzugt beidseitig der Schneide, gegebenenfalls zurückgesetzt angeordnete Tast- oder Führungsflächen, die zur mechanischen Abtastung der individuellen Profilierung der zu bearbeitenden Profiloberfläche dienen.

Dabei hat es sich als günstig erwiesen, dass die Tast- oder Führungsflächen wenigstens im Bereich des rückwärtigen Abschnitts des Schneidwerkzeuges einen Hinterschliff aufweisen. Mittels dieser Maßnahme wird erreicht, dass das Schneidwerkzeug beim Bearbeiten der unebenen Oberfläche des Profils mit der Schneide nicht aus dem Profil herausläuft.

Nach einer anderen vorteilhaften Weiterbildung ist es vorgesehen, dass bevorzugt beidseitig der Schneide im frontseitigen Bereich abgefaste Aufsatzflächen vorgesehen sind, durch die das Aufsetzen des Messers beim Beginn des Schnittvorganges begünstigt wird.

Bevorzugt grenzen die Aufsatzflächen an die Tast- oder Führungsflächen an.

Schließlich hat es sich als vorteilhaft erwiesen, dass eine Grenzlinie zwischen den Aufsatzflächen und den Tast- oder Führungsflächen winklig bezüglich der Schneide angeordnet ist. Insbesondere springt diese Grenzlinie vom Bereich der Schneide winklig nach hinten zurück.

Es sei vorliegend angemerkt, dass die individuelle Ausgestaltung des Schneidwerkzeuges auch unabhängig von der besonderen Schwenklagerung des Schneidwerkzeuges und Verfahrbarkeit des Schneidwerkzeuges in einer Ebene im wesentlichen senkrecht zur Rahmenebene zur Anwendung gelangen kann.

Weitere Vorteile und Anwendungsmöglichkeiten der vorliegenden Erfindung ergeben sich aus der nachfolgenden Beschreibung der Ausführungsbeispiele anhand der Figuren.

Es zeigen:
- Figur 1: eine Werkzeugaufnahme nach der Erfindung mit einem erfindungsgemäß ausgestalteten Schneidwerkzeug bei Schnittbeginn,
- Figur 2: die Werkzeugaufnahme mit Schneidwerkzeug etwa in der Mitte des Verfahrweges an der Eckverbindung,
- Figur 3: die Werkzeugaufnahme mit Schneidwerkzeug bei Schnittende,
- Figur 4: eine mögliche Ausführungsform eines erfindungsgemäßen Schneidwerkzeuges in einer 3D-Darstellung,
- Figur 5: das Schneidwerkzeug gemäß Figur 4 in einer Ansicht von oben,
- Figur 6: das Schneidwerkzeug gemäß Figur 4 in einer Vorderansicht und
- Figur 7: das Schneidwerkzeug gemäß Figur 4 in einer Seitenansicht.

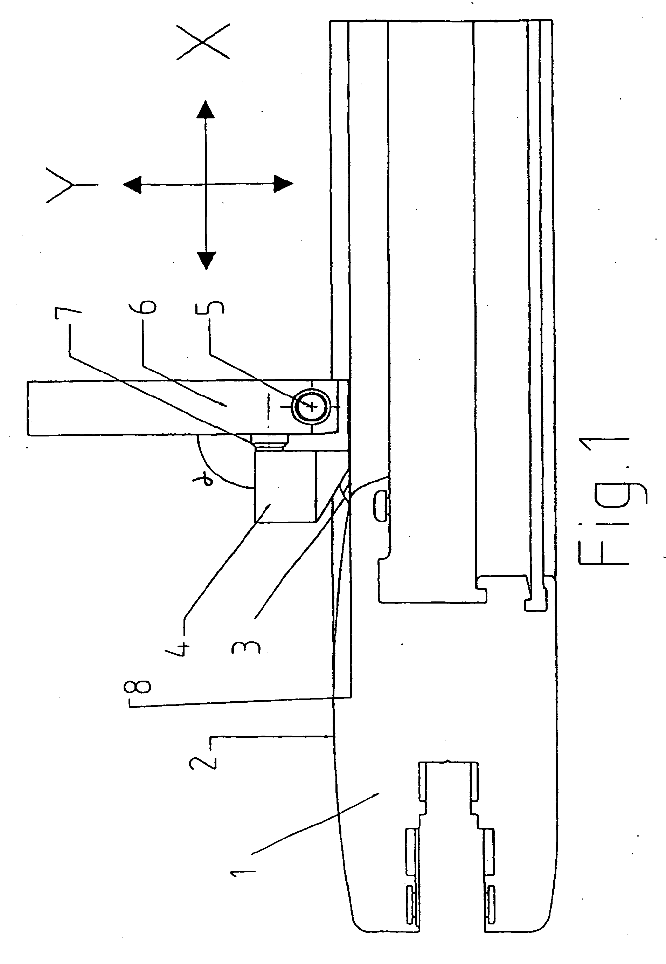

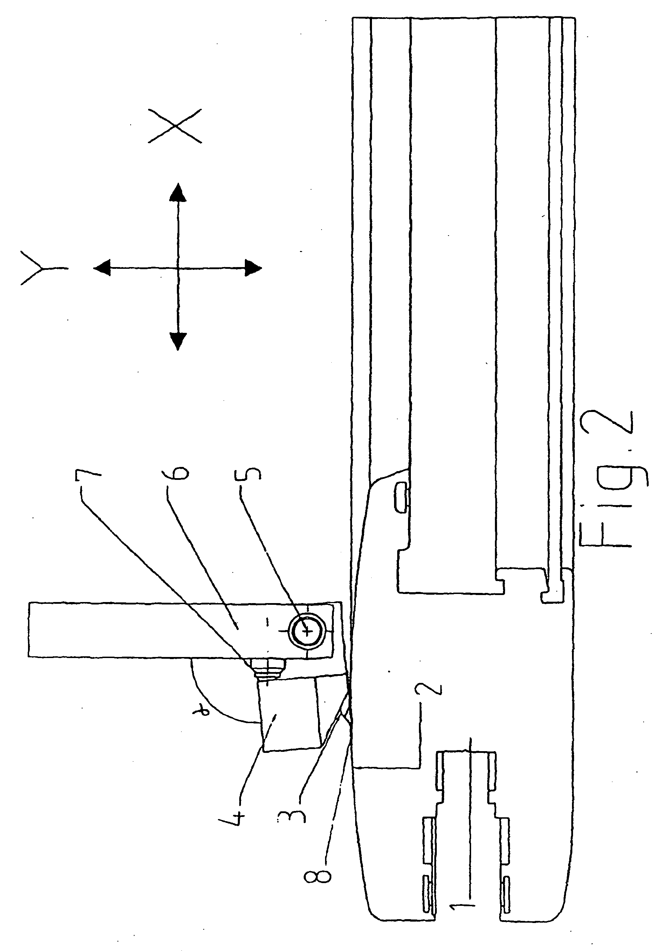

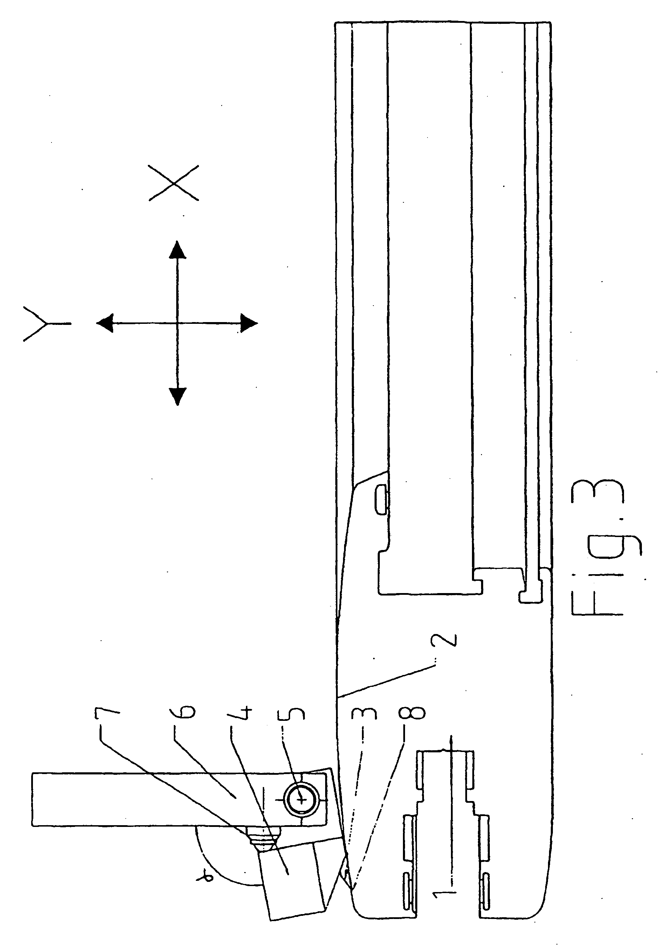

In Figuren 1 bis 3 ist eine aus Kunststoffprofilen 1 gebildete Eckverbindung dargestellt. Danach weisen die Profile 1 eine gewölbte Oberfläche 2 auf. Demgemäß muß auch das Schneidwerkzeug 3, welches zum Abtragen der beim Verschweißen der beiden Kunststoffprofile 1 entstehenden Schweißraupe dient, entlang der gewölbten Oberfläche 2 geführt werden.

Das Schneidwerkzeug 3 ist in einer Werkzeugaufnahme 4 fixiert, welche ihrerseits mittels eines in zwei aufeinander senkrecht stehenden Richtungen X, Y durch einen (nicht dargestellten) Antrieb, insbesondere einen an einem Maschinengestell gelagerten Support, verfahrbar ist, wobei das Schneidwerkzeug 3 längs der Gehrung der beiden Profile 1 verfahren wird. Die Werkzeugaufnahme 4 ist verschwenkbar um eine Schwenkachse 5 an einem Halter 6 des zweiachsigen Supports gelagert.

Zwischen Halter 6 und Werkzeugaufnahme 4 ist ein Federelement 7, vorzugsweise eine Druckfeder, angeordnet, welches die Werkzeugaufnahme 4 und damit das Schneidwerkzeug 3 während des Verfahrens in Richtung der Profiloberfläche 2 zu verschwenken trachtet.

Durch ein definiertes Verfahren des Supportes beziehungsweise des Halters 6 in vertikaler Richtung beziehungsweise in Y-Richtung lassen sich hierdurch unterschiedliche Anstellwinkel α des Schneidwerkzeuges 4 beziehungsweise seiner Schneide 8 gegenüber der Profiloberfläche 2 einstellen. Hierdurch ist es möglich, das Schneidwerkzeug 3 beziehungsweise seine Schneide 8 entsprechend der Wölbung der Profiloberfläche 2 einzustellen, um beispielsweise auch die in den Figuren dargestellten gewölbten Profile 1 zu bearbeiten und hierdurch entweder eine gleichbleibende Tiefe der Schattennut in der Profiloberfläche oder eine plane Oberfläche gleicher Güte, insbesondere in den kritischen Stellen der Innen- und Außenecke zu erzeugen.

Das jeweils zu bearbeitende Profil beziehungsweise die Profiloberfläche 2 ist in einer Steuerung abgelegt, so dass durch Verfahren des Supportes in vertikaler Richtung Y in Verbindung mit dem jeweiligen Verfahrweg des Supportes längs des zu bearbeitenden Profiles 1 in horizontaler Richtung X der jeweils gewünschte Anstellwinkel α des Schneidwerkzeuges 3 gegenüber der Profiloberfläche 2 eingestellt werden kann. Bei einer um 90° gedreht angeordneten Aufnahme für das Werkstück mit entsprechend ausgerichteten Werkzeugen wird der Werkzeughalter selbstverständlich in horizontaler Richtung beim Verfahren längs der Eckverbindung zur Einstellung unterschiedlicher Anstellwinkel α angehoben.

Das Schneidwerkzeug 3 weist beiderseits der Schneide 8 angeordnete und zurückgesetzte Führungsflächen 9 auf, welche sich im wesentlichen auf den Bereich beiderseits der Schneide 8 erstrecken beziehungsweise auf diesen Bereich begrenzt sind. Diese Tast- beziehungsweise Führungsflächen 9 sind zur rückwärtigen Seite des Schneidwerkzeuges 3 hin hinterschliffen, was durch Bezugszeichen 10 angedeutet ist. Die Längserstreckung der Tast- beziehungsweise Führungsflächen 9 beziehungsweise der Beginn des Hinterschliffs 10 richtet sich ersichtlich nach der Wölbung der Oberfläche 2 des Profiles 1.

Durch diesen Hinterschliff wird erreicht, dass das Schneidwerkzeug 3 beim Bearbeiten der entsprechenden Wölbungen an der Oberfläche 2 mit seiner Schneide 8 nicht aus dem Profil 1 herausläuft. Wäre der Hinterschliff 10 nämlich nicht vorhanden, würde sich das Schneidwerkzeug 3 nicht mehr mit seinen beiderseits der Schneide 8 angeordneten Tast- und Führungsflächen 9 abstützen, sondern nur mit seiner bezüglich der Schneide 8 hinteren Kontur,, so dass es zu einem Verkippen des Messers 3käme, welches dann außer Eingriff mit dem zu bearbeitenden Profil 1 gelangen würde.

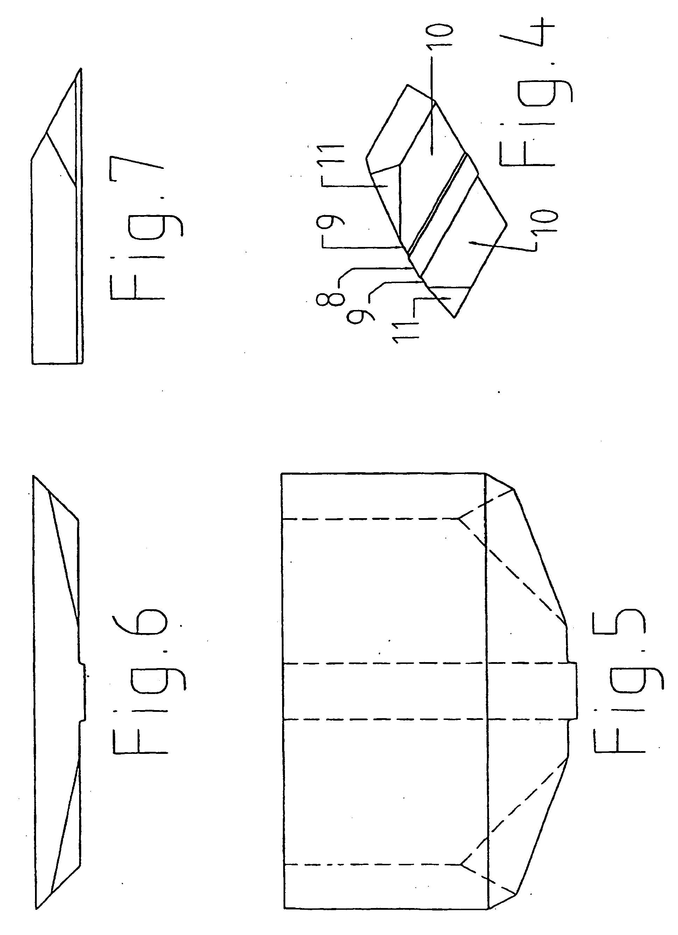

Wie aus den Figuren ersichtlich, weist das Schneidwerkzeug 4 beiderseits der Schneide 9 von außen an die Tast- und Führungsflächen angrenzende abgefaste Aufsetzfläche 11 auf, wodurch das Aufsetzen des Messers bei Schnittbeginn gewährleistet wird. Eine Grenzlinie 12 zwischen der Aufsetzfläche 11 und der Führungsfläche 9 verläuft winklig vom Bereich der Schneide 8 zum rückwärtigen Abschnitt des Schneidwerkzeuges 3, wie dies insbesondere in Figur 4, 5 dargestellt ist.

### Bezugszeichenliste

- 1: Profil
- 2: gewölbte Oberfläche
- 3: Schneidwerkzeug
- 4: Werkzeugaufnahme
- 5: Schwenkachse
- 6: Halter
- 7: Federelement
- 8: Schneide
- 9: Führungsfläche
- 10: Hinterschliff
- 11: Aufsetzfläche
- 12: Grenzlinie

- α: Anstellwinkel
- X: horizontale Richtung, 1. Achse
- Y: vertikale Richtung, 2. Achse

## Patentansprüche

1. Vorrichtung zum Entfernen von überstehenden Schweißraupen an Eckverbindungen von aus gewölbten Kunststoffprofilen (1) zusammengeschweißten Fenster- oder Türrahmen, mit einem nichtrotierendem Schneidwerkzeug (3), insbesondere einem Abstech- oder Abziehmesser, welches in eine Werkzeugaufnahme (4) eingesetzt ist, wobei die Werkzeugaufnahme (4) mittels eines verfahrbaren Halters (6) oder Werkzeugschlittens in einer ersten Achse (X) sowie einer zweiten Achse (Y) verfahrbar ist, wobei die beiden Achsen (X, Y) eine zur Rahmenebene im wesentlichen senkrechte Ebene aufspannen, wobei die Werkzeugaufnahme (4) um eine Schwenkachse (5) verschwenkbar am Werkzeugschlitten gelagert ist, dass die Werkzeugaufnahme (4) beziehungsweise das Schneidwerkzeug (3) mit einer Federvorspannung beaufschlagt ist und das Schneidwerkzeug (3) eine Tast- beziehungsweise Führungsfläche (9) zum Erfassen der Profilierung der Oberfläche (2) des Profils (1) aufweist, wobei der Werkzeugschlitten beziehungsweise Halter (6) eine Steuervorrichtung aufweist, in der das Profil der Oberfläche (2) des zu bearbeitenden Rahmens abgelegt ist, wobei das Schneidewerkzeug (3) entsprechend der jeweiligen Wölbung der zu bearbeitenden Oberfläche in vertikaler Richtung verfahrbar ist.

2. Vorrichtung nach Anspruch 1, **dadurch gekennzeichnet, dass** die Federvorspannung die Werkzeugaufnahme (4) beziehungsweise das Schneidwerkzeug (3) hin zur Oberfläche (2) des Profils (1) zu verschwenken trachtet.

3. Vorrichtung nach einem der vorhergehenden Ansprüche, **dadurch gekennzeichnet, dass** der schwenkarm als Abstand zwischen Schwenkachse (5) und Schneide (8) des Schneidwerkzeuges (3) im Vergleich zur Profilbreite im Bereich der Eckverbindung kurz ist und bevorzugt Werte kleiner als 1/3, bevorzugt kleiner als 1/5, der Profilbreite annimmt.

4. Vorrichtung nach einem der vorhergehenden Ansprüche, **dadurch gekennzeichnet, dass** ein variabel einstellbarer Anstellwinkel (α) des Schneidwerkzeuges (3) eine Funktion des Verfahrweges des Werkzeugschlittens beziehungsweise Schneidwerkzeuges (3) in der ersten und/oder zweiten Achse (X, Y) ist.

5. Vorrichtung nach einem der vorhergehenden Ansprüche, **dadurch gekennzeichnet, dass** die Federvorspannung durch ein Federelement (7), bevorzugt eine Druckfeder, erzeugt ist.

6. Vorrichtung nach Anspruch 5, **dadurch gekennzeichnet, dass** das Federelement (7) zwischen dem Halter (6) und der Werkzeugaufnahme (4) eingespannt ist.

7. Vorrichtung nach einem der vorhergehenden Ansprüche, **dadurch gekennzeichnet, dass** das Schneidwerkzeug (3) bevorzugt beidseitig der Schneide (8), gegebenenfalls zurückgesetzt angeordnete Tast- oder Führungsflächen (9) aufweist.

8. Vorrichtung nach einem der vorhergehenden Ansprüche, **dadurch gekennzeichnet, dass** die Tastoder Führungsfläche (9) wenigstens im Bereich des rückwärtigen Abschnitts des Schneidwerkzeuges (3) einen Hinterschliff (10) aufweisen.

9. Vorrichtung nach einem der vorhergehenden Ansprüche, **dadurch gekennzeichnet, dass** bevorzugt beidseitig der Schneide (8) des Schneidwerkzeuges (3) im frontseitigen Bereich abgefaste Aufsatzflächen (11) vorgesehen sind.

10. Vorrichtung nach Anspruch 9, **dadurch gekennzeichnet, dass** die Aufsatzflächen (11) an die Tast- oder Führungsflächen (9) angrenzen.

11. Vorrichtung nach Anspruch 10, **dadurch gekennzeichnet, dass** eine Grenzlinie (12) zwischen Aufsatzfläche (11) und Tastoder Führungsfläche (9) winklig bezüglich der Schneide (8) angeordnet ist.

## Claims

1. Device for removing protruding weld beads at corner connections of window or door frames welded together from curved plastics material profile members (1), comprising a non-rotating cutting tool (3), particularly a paring or skimming knife, which is inserted into a tool mount (4), wherein the tool mount (4) is movable by means of a movable holder (6) or tool slide in a first axis (X) as well as a second axis (Y), wherein the two axes (X, Y) span a plane substantially perpendicular to the plane of the frame, wherein the tool mount (4) is mounted at the tool slide to be pivotable about a pivot axis (5), that the tool mount (4) or the cutting tool (3) is acted on by a spring bias and the cutting tool (3) has a scanning or guide surface (9) for detecting the profiling of the surface (2) of the profile member (1), wherein the tool slide or holder (6) comprises a control device in which the profile of the surface (2) of the frame to be processed is stored, wherein the cutting tool (3) is movable in correspondence with the respective curvature of the surface, which is to be processed, in vertical direction.

2. Device according to claim 1, **characterised in that** the spring bias tends to pivot the tool mount (4) or the cutting tool (3) towards the surface (2) of the profile member (1).

3. Device according to one of the preceding claims, **characterised in that** the pivot arm as distance between pivot axis (5) and cutting edge (8) of the cutting tool (3) is short by comparison with the profile width in the region of the corner connection and preferably adopts values less than 1/3, preferably less than 1/5, of the profile width.

4. Device according to one of the preceding claims, **characterised in that** a variably settable adjustment angle (α) of the cutting tool (3) is a function of the travel path of the tool slide or the cutting tool (3) in the first and/or second axis (X, Y).

5. Device according to one of the preceding claims, **characterised in that** the spring bias is produced by a spring element (7), preferably a compression spring.

6. Device according to claim 5, **characterised in that** the spring element (7) is clamped in place between the holder (6) and the tool mount (4).

7. Device according to one of the preceding claims, **characterised in that** the cutting tool (3) has scanning or guide surfaces (9) preferably arranged at both sides of the cutting edge (8), in a given case to be set back.

8. Device according to one of the preceding claims, **characterised in that** the scanning or guide surface (9) has a rebate (10) at least in the region of the rearward section of the cutting tool (3).

9. Device according to one of the preceding claims, **characterised in that** bevelled top surfaces (11) are provided preferably at both sides of the cutting edge (8) of the cutting tool (3) in the frontal region.

10. Device according to claim 9, **characterised in that** the top surfaces (11) adjoin the scanning or guide surfaces (9).

11. Device according to claim 10, **characterised in that** a boundary line (12) between top surface (11) and scanning or guide surface (9) is arranged to be angled with respect to the cutting edge (8).

## Revendications

1. Dispositif destiné à enlever des bavures de soudage dépassant des joints d'angle de cadres de fenêtre ou porte réalisés par soudage de profilés bombés (1) en matière plastique, comportant un outil de coupe (3) non rotatif, en particulier un couteau de tranchage ou un couteau de raclage, qui est monté dans un porte-outil (4), le porte-outil (4) pouvant être déplacé au moyen d'un support (6) mobile ou chariot dans un premier axe (X) et dans un deuxième axe (Y), les deux axes (X, Y) déployant un plan sensiblement perpendiculaire au plan du cadre, dans lequel le porte-outil (4) est monté pivotant sur le chariot autour d'un axe de pivotement (5), le porte-outil (4) ou l'outil de coupe (3) est sollicité par une précontrainte élastique et l'outil de coupe (3) présente une surface de palpation ou de guidage (9) destinée à détecter le profilage de la surface (2) du profilé (1), dans lequel le chariot ou le support (6) présente un dispositif de commande dans lequel est stocké le profil de la surface (2) du cadre à traiter, dans lequel l'outil de coupe (3) peut être déplacé dans la direction verticale selon le bombement respectif de la surface à traiter.

2. Dispositif selon la revendication 1, **caractérisé en ce que** la précontrainte élastique tend à faire pivoter le porte-outil (4) ou l'outil de coupe (3) vers la surface (2) du profilé (1).

3. Dispositif selon l'une quelconque des revendications précédentes, **caractérisé en ce que** le bras pivotant en tant que distance entre l'axe de pivotement (5) et l'arête de coupe (8) de l'outil de coupe (3) est court par rapport à la largeur du profilé dans la zone du joint d'angle et adopte de préférence des valeurs inférieures à 1/3, de préférence inférieures à 1/5 de la largeur du profilé.

4. Dispositif selon l'une quelconque des revendications précédentes, **caractérisé en ce qu'**un angle d'attaque (α), à réglage variable, de l'outil de coupe (3) est une fonction du trajet du chariot ou de l'outil de coupe (3) dans le premier et/ou le deuxième axe (X, Y).

5. Dispositif selon l'une quelconque des revendications précédentes, **caractérisé en ce que** la précontrainte élastique est exercée par un élément à ressort (7), de préférence un ressort de pression.

6. Dispositif selon la revendication 5, **caractérisé en ce que** l'élément à ressort (7) est tendu entre le support (6) et le porte-outil (4).

7. Dispositif selon l'une quelconque des revendications précédentes, **caractérisé en ce que** l'outil de coupe (3) comporte, de préférence de part et d'autre de l'arête de coupe (8), des surfaces de palpation ou surfaces de guidage (9), agencées le cas échéant en retrait.

8. Dispositif selon l'une quelconque des revendications précédentes, **caractérisé en ce que** la surface de palpation ou de guidage (9) présente une contre-dépouille (10) au moins dans la zone de la partie arrière de l'outil de coupe (3).

9. Dispositif selon l'une quelconque des revendications précédentes, **caractérisé en ce que** des surfaces rapportées (11), chanfreinées dans la zone frontale, sont prévues de préférence de part et d'autre de l'arête de coupe (8) de l'outil de coupe (3).

10. Dispositif selon la revendication 9, **caractérisé en ce que** les surfaces rapportées (11) sont adjacentes à la surface de palpation ou de guidage (9).

11. Dispositif selon la revendication 10, **caractérisé en ce qu'**une ligne limite (12) est agencée en angle par rapport à l'arête de coupe (8) entre la surface rapportée (11) et la surface de palpation ou surface de guidage (9).
